# FASCICULE DE BREVET EUROPEEN

(11) **EP 0 450 298 B1**
(45) Date de publication et mention de la délivrance du brevet: **19.06.1996**
(21) Numéro de dépôt: 91102572.4
(22) Date de dépôt: 22.02.1991
(51) Int. Cl.: G01N 1/22, G01K 1/14, C21B 7/24

(54) **Sonde de prise d'échantillons gazeux et de mesures thermiques au-dessus de la surface de chargement d'un four à cuve**
Sonde für Gasprobeentnahme und thermische Messungen über der Beschickungsebene eines Schachtofens
Probe for taking gaseous samples and making thermal measurements above the charging surface of a shaft furnace

(30) Priorité: 07.03.1990 LU 87694
(43) Date de publication de la demande: 09.10.1991
(73) Titulaire: PAUL WURTH S.A., L-1122 Luxembourg (LU)
(72) Inventeur: Mailliet, Pierre, L-1423 Howald (LU); Lonardi, Emile, L-4945 Bascharage (LU); Wies, Georges, L-3462 Dudelange (LU)
(74) Mandataire: Freylinger, Ernest T.

(56) Documents cités:
- FR-A- 2 320 528
- NL-A- 7 113 148
- US-A- 4 061 036

## Description

La présente invention concerne une sonde de prise d'échantillons gazeux et de mesures thermiques au-dessus de la surface de chargement d'un four à cuve, comprenant un bras de sonde pourvu d'une série d'orifices pour prendre simultanément des échantillons gazeux et effectuer des mesures thermiques à différents endroits de la surface de chargement.

Jusqu'à présent, on connaît essentiellement deux types de sondes du genre décrit ci-dessus, à savoir celles qui sont fixes et celles qui sont rétractables à travers la paroi du four. Celles qui sont fixes et immobiles au-dessus de la surface de chargement ont l'inconvénient de perturber la trajectoire de chute de la matière de chargement et d'être exposées aux chocs de celle-ci, ce qui entraîne une usure très rapide. Celles qui sont déplaçables radialement sont introduites dans le four entre deux cycles de chargement et sont, à nouveau, extraites en vue du cycle de chargement suivant. Ces sondes ne présentent pas les inconvénients des sondes fixes, mais elles nécessitent des moyens pour les faire déplacer, ainsi que des moyens pour rendre étanche leur passage à travers la paroi du four. En outre, elles occasionnent une perte de temps nécessaire à leur manoeuvre.

Le brevet US 4,061.036 propose une sonde améliorée qui est pivotante. Le bras de cette sonde est fixé sur une tige verticale traversant la partie oblique de la paroi de la tête du four et qui comporte des moyens pour la faire pivoter autour de son axe vertical. Sous l'effet de ce mouvement, le bras de sonde horizontal effectue un mouvement de balayage de la surface de chargement. Cette sonde présente l'avantage de pouvoir effectuer des mesures sur toute sa surface de balayage, alors que les autres sondes ne peuvent effectuer des mesures que suivant une ligne radiale. En outre, le bras de sonde peut être déplacé rapidement dans une position de garage près de la paroi du four où il ne perturbe pas le chargement et n'est pas exposé à la trajectoire de chute de la matière de chargement. Par contre, l'entretien de la sonde, notamment le remplacement des thermocouples et le débouchage des tubes de prise d'échantillons gazeux nécessite le démontage de toute la sonde, d'autant plus que ce démontage est rendu difficile par le fait qu'il doit être effectué verticalement à travers l'ouverture dans la partie oblique de la paroi du four. La sonde selon le brevet US-A-4,061,036 a de plus le désavantage qu'en cas de profil en "V" de la surface de chargement les mesures thermiques sont réalisées à des hauteurs différentes au-dessus de la surface de chargement, ce qui peut causer des erreurs d'interprétation des mesures.
Le but de la présente invention est de prévoir une sonde, dont le bras de sonde ne doit pas être retiré du four et peut être ramené à dans une position de garage l'intérieure du four à cuve dans laquelle il est situé à l'abris de la trajectoire de chute de la matière de chargement, mais qui, en comparaison avec la sonde connue du document US-A-4,061,036, est par contre plus facilement accessible de l'extérieur du four pour l'entretien, et qui permet en outre une meilleure interprétation des mesures en cas d'un profil en "V" de la surface de chargement.

Ce but est atteint par une sonde selon la première revendication.

Il sera noté qu'une sonde selon l'invention présente notamment l'avatage qu'elle permet un remplacement facile des thermocouples et un débouchage rapide des tuyaux de prise d'échantillons gazeux sans devoir démonter la sonde. Cependant, comme pour les sondes du brevet US-A-4,061,036, le bras de sonde selon l'invention peut rester dans le four, où il peut être déplacé rapidement dans une position de garage à l'abris de la trajectoire de chute de la matière de chargement sans perturber le processus de chargement. De plus, la sonde selon l'invention permet d'adapter l'inclinaison du bras de sonde au profil de chargement et d'éviter ainsi des erreurs d'interprétation des mesures en cas d'un profil en "V" de la surface de chargement.

Selon une exécution préférée, ladite ouverture est entourée par un anneau de support solidaire de la paroi du four et pourvue de deux tourillons extérieurs diamétralement opposés sur lesquels sont articulés deux bras parallèles supportant entre eux le bras de sonde. Ledit bras est alors mobile autour du centre dudit anneau, sous l'action d'au moins un vérin monté entre ledit anneau et l'extrémité extérieure du bras de sonde.

L'extrémité extérieure du bras de sonde est, de préférence, portée par une bague de suspension qui est solidaire des deux bras et sur laquelle est articulé ledit vérin.

Selon un premier mode de réalisation préféré, l'anneau de support est un bloc de roulement comprenant une couronne fixe solidaire de la paroi du four et une couronne mobile comprenant lesdits tourillons et pouvant graviter autour de la couronne fixe sous l'action d'un moteur. Cette rotation permet au bras de sonde, lorsque celui-ci occupe une position angulaire autre que celle correspondant à l'axe de rotation d'effectuer un mouvement de révolution en décrivant une surface de révolution conique. Ceci permet au bras de sonde d'être incliné parallèlement au talus de déversement pour effectuer des mesures et d'être écarté latéralement suivant ce mouvement de révolution dans une position de garage pour être à l'abri de la trajectoire de chute de la matière de chargement.

Suivant l'angle du talus de déversement, le bloc de roulement peut être orienté de différentes manières par rapport à une direction diamétrale du four. Le bloc peut être disposé de manière à ce que son axe de rotation soit horizontal et diamétral par rapport au four. Le bloc peut également être disposé de manière que son axe de rotation soit horizontal et fasse un angle aigu avec l'axe diamétral du four passant par le centre du bloc de roulement.

Le bloc de roulement peut également être incliné de manière à ce que son axe de rotation fasse, dans un plan vertical, un angle aigu avec l'horizontale en s'élevant vers le centre du four.

Selon un autre mode de réalisation, l'anneau de support est un anneau double avec une fonction de cardan comprenant un anneau extérieur pourvu de ladite paire de tourillons extérieurs, et pourvu, en outre, d'une paire de tourillons intérieurs disposés en croix avec les tourillons extérieurs et pivotant sur un anneau intérieur solidaire de la paroi du four.

D'autres particularités et caractéristiques ressortiront de la description détaillée de quelques modes de réalisation présentés ci-dessous, à titre d'illustration, en référence aux figures annexées dans lesquelles :
La figure 1 montre schématiquement un premier mode de réalisation d'une sonde selon la présente invention montré en deux positions d'inclinaison différentes ;
La figure 1a montre les détails de la suspension de la sonde en coupe verticale ;
La figure 2 montre une perspective de la partie extérieure de la sonde et de sa suspension ;
La figure 3 montre un second mode de réalisation selon la présente invention ;
La figure 3b montre une vue suivant le plan de coupe B-B sur la figure 3 ;
La figure 4 montre schématiquement un premier mode opératoire en projection verticale ;
La figure 5 montre schématiquement le premier mode opératoire en projection axiale ;
La figure 6 montre schématiquement le premier mode opératoire en projection horizontale ;
La figure 7 montre le premier mode opératoire en perspective ;
Les figures 8 à 11 sont des vues schématiques correspondant aux figures 4 à 7 et illustrent un second mode opératoire ;
Les figures 12 à 15 illustrent schématiquement des représentations correspondants aux figures 4 à 7 et représentent un troisième mode opératoire ;
La figure 16 illustre schématiquement en projection horizontale un quatrième mode opératoire ;
La figure 17 représente schématiquement une vue en projection verticale dans la direction C sur la figure 16 ;
La figure 18 illustre schématiquement une vue en projection verticale dans la direction B sur la figure 16 ;
La figure 19 représente schématiquement une vue en projection verticale dans la direction A sur la figure 16 et
La figure 20 montre une vue en perspective du mode opératoire de la figure 16.

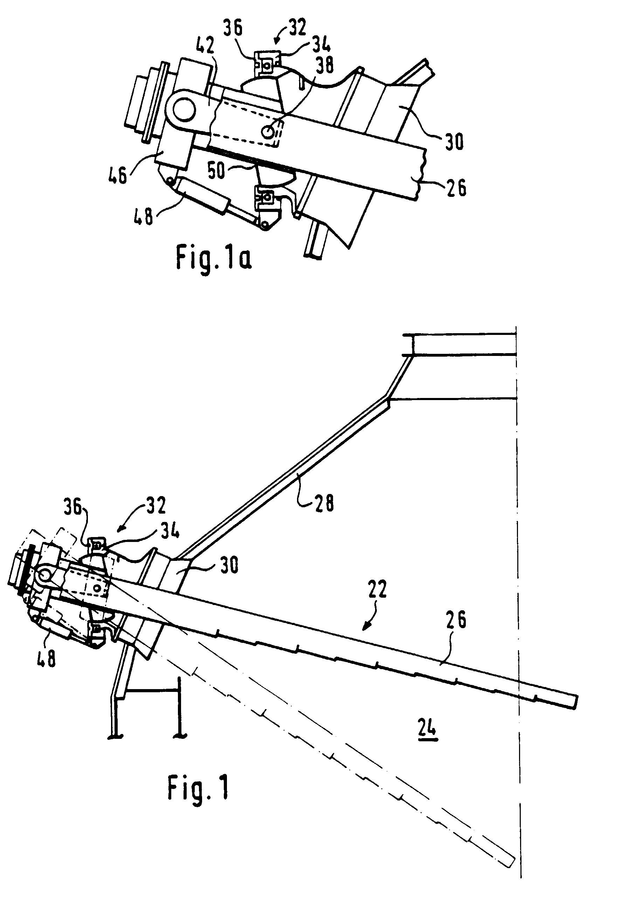

La figure 1 montre un premier mode de réalisation d'une sonde 22 selon la présente invention qui est montée au-dessus de la surface de chargement d'un haut fourneau 24. Il s'agit, plus particulièrement d'un haut fourneau qui fonctionne avec un profil de chargement en "V" c'est-à-dire avec un talus de déversement conique qui monte du centre de la surface de chargement vers la paroi. La sonde 22 comporte essentiellement un bras de sonde rectiligne 26 qui est conçu pour pouvoir accéder, notamment en vue du démontage, aux thermocouples et aux tubes de prise d'échantillons gazeux à partir de l'extérieur du four sans nécessité de démontage du bras de sonde 26.

Conformément à la présente invention, la sonde comporte un système de suspension du bras 26 pour permettre à celui-ci d'être incliné, en position de sondage, conformément à la pente du talus de déversement, ce qui est illustré par les deux positions angulaires différentes du bras 26 représenté sur la figure 1.

Le bras de sonde 26 pénètre par une ouverture 30 à travers la paroi 28 du four 24 et s'étend jusque dans la région centrale de celui-ci. Le support du bras 26 est assuré par un anneau de support 32 solidaire du bord de l'ouverture 30 et de la paroi 28.

Dans le mode de réalisation de la figure 1, l'anneau de support 32 est constitué par un bloc de roulement comprenant une couronne fixe 34 solidaire du bord de l'ouverture 30 et une couronne mobile 36 pouvant graviter autour de la couronne fixe 34 par l'intermédiaire de moyens de roulement connus tels que des billes ou des rouleaux. Cette couronne mobile 36 est actionnée par des moyens non-représentés pour pouvoir la faire tourner autour de la couronne 34. A cet effet, elle peut être pourvue d'une couronne dentée formant engrenage avec un pignon d'entraînement non représenté. La couronne mobile extérieure 36 comporte deux tourillons latéraux 38 et 40 diamétralement opposés et sur lesquels sont articulés deux bras 42 et 44 s'étendant parallèlement de part et d'autre du bras de sonde 26 et solidaire de celui-ci par l'intermédiaire d'une bague de suspension 46 prévue autour de la partie extérieure du bras de sonde 26. Un vérin hydraulique 48 monté entre la bague de suspension 46 et la couronne mobile 36 permet de faire basculer le bras de sonde 26 autour de l'axe des tourillons 38 et 40 comme représenté sur la figure 1 et de modifier ainsi l'inclinaison du bras 26 dans le four.

L'étanchéité entre l'intérieur du four 24 et l'extérieur est assurée par un joint sphérique constitué, en l'occurrence, par un segment sphérique 50 qui est solidaire du bras de sonde 26 et dont le centre de courbure correspond au centre de rotation de la couronne 36, centre se trouvant sur l'axe des deux tourillons 38 et 40. La surface intérieure de la couronne fixe 34 du bloc 32 est conçue comme surface de glissement sphérique de même centre de courbure de manière à ce que le segment 50 puisse évoluer de façon étanche sur cette surface de glissement lors de la rotation de la couronne 36 et lors du pivotement du bras de sonde 26 autour de l'axe des tourillons 38 et 40. La surface de glissement de la couronne 34 peut être pourvue, à cet effet, d'une garniture d'étanchéité connue en soi. Il est à noter que le segment 50 assure seulement une fonction de guidage et d'étanchéité et aucune fonction de support, celle-ci étant entièrement assurée par le bloc de roulement 32 en collaboration avec les deux bras 42, 44 portant le bras de sonde 26.

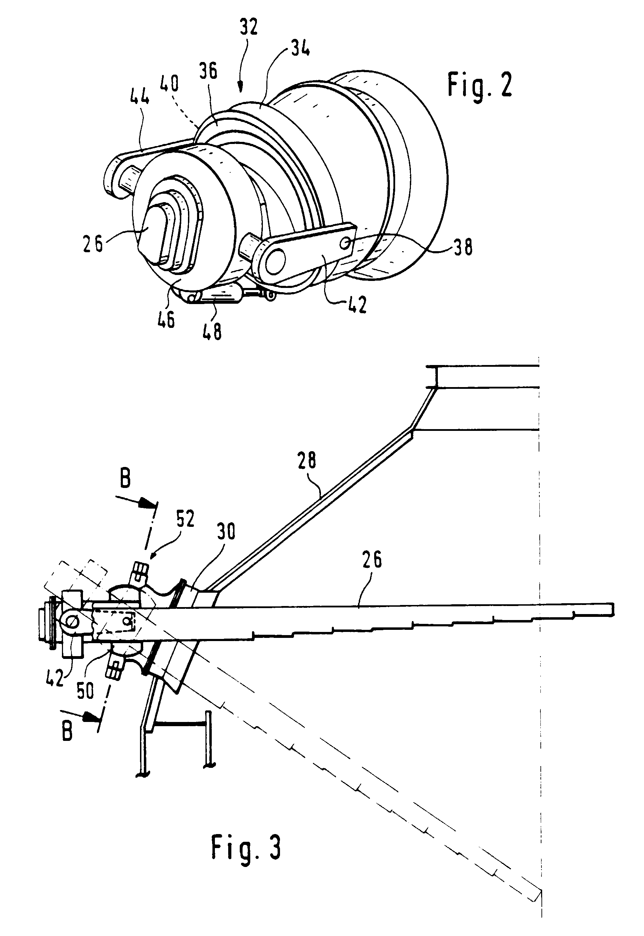

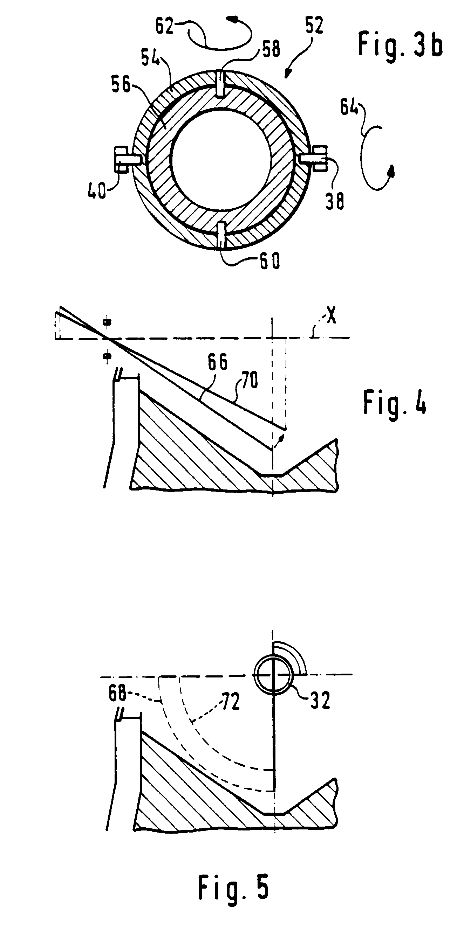

La figure 3 montre un deuxième mode de réalisation de la suspension du bras de sonde 26. Comme dans le premier mode de réalisation, le bras de sonde 26 est porté par deux bras 42, 44 articulés sur des tourillons latéraux 38 et 40 d'un anneau de support 52 solidaire du bord de l'ouverture, le guidage et l'étanchéité étant assurés également par un segment sphérique 50 évoluant sur la surface de glissement sphérique intérieure de l'anneau de support 52. Toutefois, contrairement au mode de réalisation selon la figure 1, l'anneau de support 52 n'est pas constitué comme bloc de roulement mais comme cardan. Comme représenté sur la figure 3b, l'anneau de support est constitué d'un anneau extérieur 54 pourvu des tourillons 38 et 40 et d'un anneau intérieur 56 qui est fixe et qui est solidaire du bord de l'ouverture 30. L'anneau extérieur 54 est relié à l'anneau intérieur 56 par l'intermédiaire de deux tourillons 58, 60 disposés en croix avec les tourillons 38 et 40. L'anneau extérieur 54 peut donc pivoter par rapport à l'anneau intérieur 56 autour de l'axe des tourillons 58 et 60, ce qui est symbolisé par la flèche 62. Indépendamment de cela, le bras de sonde 26 peut pivoter autour des tourillons 38 et 40, ce qui est symbolisé par la flèche 64. Ces deux pivotements sont engendrés par des vérins hydrauliques non représentés semblables au vérin 48 de la figure 1. Pour permettre le pivotement de l'anneau extérieur 54 par rapport à l'anneau intérieur 56, leurs surfaces de contact doivent être de forme sphérique avec comme centre de courbure le point d'intersection entre les deux axes des quatres tourillons. Cette possibilité de pivotement permet, par conséquent, au bras de sonde 26 d'occuper toute inclinaison arbitraire horizontale ou verticale à l'intérieur du four.

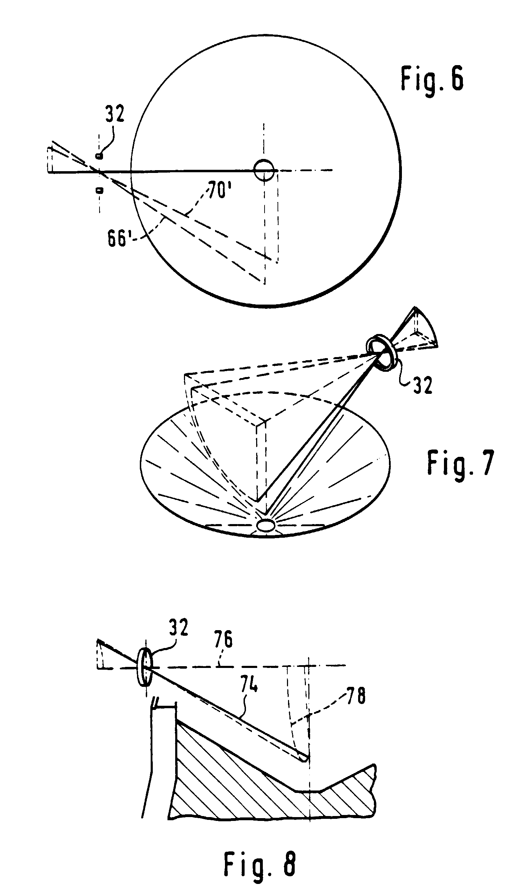

On va maintenant décrire un premier mode d'utilisation d une sonde pour le mode de réalisation selon la figure 1 et en référence aux deux positions angulaires illustrées sur la figure 1. La position 66 illustrée sur la figure 4 correspond à un profil de chargement à talus de déversement très raide. Pour le sondage, le bras de sonde 26 est disposé parallèlement au talus de déversement par pivotement autour de ses tourillons de suspension 38 et 40 sous l'action du vérin 48. A la fin du sondage, le bras de sonde 26 est déplacé dans une position de garage pour être à l'abri de la trajectoire de la matière de chargement et de la forte chaleur régnant au centre du four. A cet effet, la couronne mobile 36 de l'anneau de support 32 est tournée d'un quart de tour sans modification de la position angulaire du bras de sonde 26 par rapport à ses tourillons de suspension. Grâce à cette rotation de la couronne 36 autour de son axe X, le bras de sonde 26 décrit un mouvement de précession conique autour de l'axe X correspondant à la surface d'un hyperboloïde comme représenté sur la figure 7. Le nez de la sonde 26 décrit, comme représenté sur la figure 5, un quart de cercle 68 jusqu'à ce que le bras de sonde 26 se trouve dans une position horizontale correspondant à la position de garage 66' illustrée sur la figure 6. Plus l'inclinaison du bras de sonde 26 dans la position de sondage selon la figure 4 est grande, plus près de la paroi sera la position de garage selon la figure 6 car, comme le montre la figure 5, le rayon du cercle 68 décrit par le nez de la sonde 26 sera d'autant plus grand que l'inclinaison du bras est plus élevée.

Pour le sondage de surface de chargement à talus de déversement moins raide, le bras de sonde 26 peut être relevé, par exemple dans la position illustrée par la référence 70 sur la figure 4. Toutefois, comme le montre la figure 5, le relèvement du bras de sonde 26 dans une position moins raide, comme la position 70, diminue le rayon du cercle 72 décrit par le nez du bras de sonde lorsque celle-ci est pivotée autour de l'axe X. Ceci signifie que, comme le confirme la figure 6, la position de garage 70' reste trop loin de la paroi du four. Toutefois, ceci ne pose aucun problème car, une fois dans la position de garage 70', il suffit de pivoter le bras de sonde 26 horizontalement autour de l'axe des tourillons 38, 40 par le vérin 48 afin d'augmenter son angle par rapport à l'axe X et pivoter ainsi le bras 26 jusqu'à ce qu'il soit suffisamment près de la paroi du four, par exemple dans la position 66' selon la figure 6.

Le mode de réalisation selon la figure 1 avec possibilité de pivotement et de rotation du bras de sonde 26 est plus particulièrement conçu pour un four à cuve qui fonctionne avec différents profils de chargement, c'est-à-dire avec des talus de déversement plus ou moins raides. Par contre, lorsqu'un four fonctionne toujours avec le même talus de déversement, il n'est pas nécessaire de prévoir la possibilité de pivotement du bras 26 autour des tourillons 38 et 40. Le bras de sonde 26 pourra alors être solidaire de la couronne mobile 36 avec une inclinaison déterminée par rapport à l'axe X correspondant à l'angle du talus de déversement.

En effet, comme décrit en référence aux figures 4 à 7, lorsque le talus de déversement est raide et que le bras de sonde 26 occupe la position 66, on ne se sert pas de la possibilité de pivotement du bras 26 autour des tourillons 38 et 40 pour déplacer le bras d'une position de sondage vers une position de garage et vice-versa. Par contre, lorsque le bras de sonde 26 occupe une position moins raide comme celle représentée par 70 sur la figure 4, la seule rotation du bras 26 autour de l'axe X ne suffit plus pour amener la sonde dans une position de garage suffisamment près de la paroi du four et il faut avoir recours au pivotement du bras 26 autour de ces tourillons de support 38 et 40 pour augmenter l'angle d'inclinaison par rapport à l'axe X.

Les figures 8 à 15 illustrent deux astuces de montage de la sonde qui permettent de résoudre ce problème et de déplacer la sonde dans une position de garage à l'écart de la trajectoire de chute de la matière de chargement, sans nécessité de pivotement du bras de sonde.

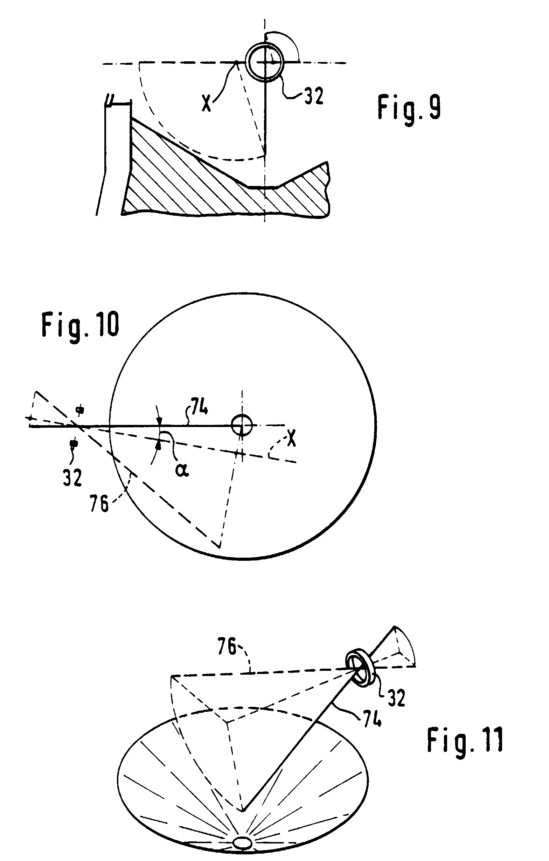

La figure 8 montre le bras de sonde 26 dans une position 74 suivant un angle d'inclinaison correspondant sensiblement à celui de la sonde 70 de la figure 4. Dans le mode de réalisation des figures 8 à 11, le pivotement prévu pour déplacer le bras de sonde selon la figure 4 de la position 70' vers la position 66' est remplacé par une orientation correspondante de l'anneau de support 32 de manière à ce que l'axe de rotation X fasse, comme le montre la figure 10, un angle aigu α avec le plan diamétral vertical. Il en résulte que le nez du bras de sonde 26 décrit lors du pivotement entre la position de sondage 74 et la position de garage 76 un arc de cercle 78 (voir figure 9) qui est supérieur à 90°, le bras de sonde 26 engendrant toujours, comme le montre la figure 11, une surface d'un hyperboloïde. Dans ce mode de réalisation, l'angle α sera d'autant plus faible que le talus de déversement est plus raide.

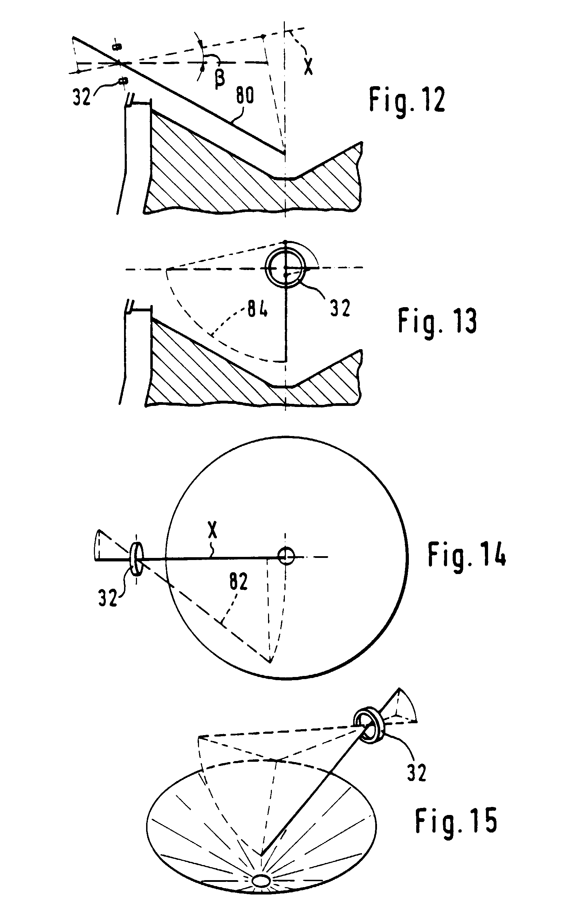

Un résultat analogue à celui de la disposition selon les figures 8 à 11 peut être obtenu par la disposition selon les figures 12 à 15. En effet, selon la figure 12, la position 80 du bras de sonde en position de sondage selon la figure 12 correspond sensiblement à la position 74 de la figure 8 et, de même, la position de garage 82 selon la figure 14 correspond sensiblement à la position de garage 76 selon la figure 10. Toutefois, comme le montre la figure 14, l'axe de rotation X, contrairement à la figure 10, reste dans le plan diamétral mais, comme montré par la figure 12, l'anneau de support 32 est orienté de manière à ce que son axe de rotation X fasse dans le plan diamétral un angle β avec l'horizontale en s'élevant en direction du centre. L'effet de cette orientation de l'axe X ressort de la figure 13 qui montre que le rayon du cercle 84 décrit par le nez du bras de sonde 26 est augmenté proportionnellement à l'amplitude de l'angle β, ce qui fait que dans la position de garage 82 selon la figure 14, le bras de sonde est écarté davantage du plan diamétral vertical. Comme dans le mode d'exécution des figures 8 à 11, l'angle β peut être d'autant plus faible que le talus de déversement est plus raide.

Le mode de réalisation de la figure 3 ne nécessite pas de schéma fonctionnel pour illustrer ses possibilités de manoeuvre. En effet, l'articulation universelle à cardan selon la figure 3b permet de placer le bras de sonde 26 dans toute position angulaire arbitraire quelle que soit l'inclinaison du talus de déversement.

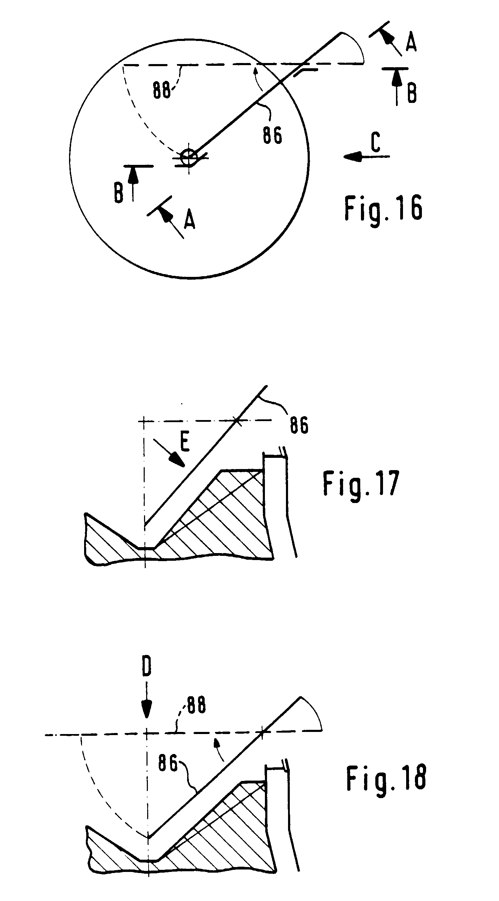

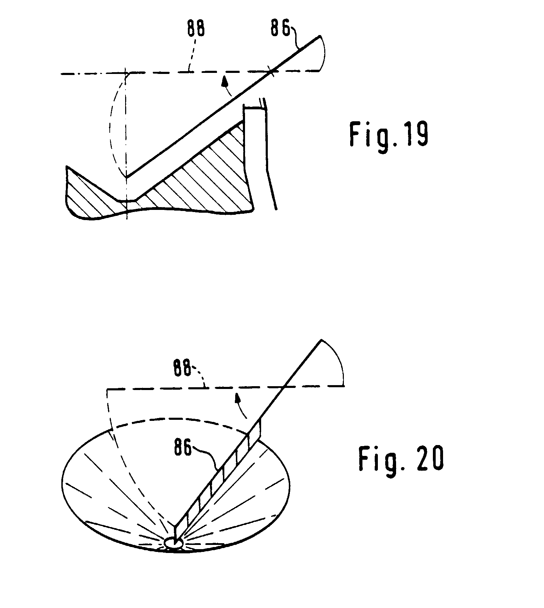

Lorsqu'un four fonctionne en permanence avec le même profil de chargement, il est même possible, à l'instar du mode de réalisation de la figure 1, de simplifier le mode de réalisation de la figure 3 en remplaçant l'articulation universelle à cardan par une suspension à simple pivotement autour des tourillons 38 et 40, c'est-à-dire de supprimer les tourillons 58 et 60 et de prévoir un seul anneau de suspension au lieu de deux. Les figures 16 à 20 sont des schémas fonctionnels illustrant le mouvement du bras de sonde 26 pour un tel mode de réalisation simplifié. Ces figures montrent le bras de sonde en position de sondage 86 et en position de garage 88 qui est une position horizontale. Dans ce mode de réalisation simplifiée, la suspension du bras de sonde 26 est conçue de manière à ce que l'axe de pivotement autour des tourillons 38 et 40 soit incliné par rapport à l'horizontale en fonction de la raideur du talus de déversement. Il en résulte que le bras de sonde 26 est déplacé entre la position de sondage 86 et la position de garage 88 et vice-versa par pivotement autour des tourillons 38 et 40 en balayant un plan incliné comme représenté sur la vue en perspective de la figure 20.

L'inclinaison du bras de sonde en position de sondage ainsi que l'angle du talus de déversement sont illustrés par la figure 19. Ces angles apparaissent plus grands sur les figures 17 et 18 à cause des vues obliques suivant les directions C respectivement D.

## Revendications

1. Sonde pour la prise d'échantillons gazeux et de mesures thermiques au-dessus d'une surface de chargement d'un four à cuve comprenant:
un bras de sonde (26) pourvu d'une série d'orifices espacés le long du bras de sonde (26) pour simultanément prendre des échantillons gazeux et effectuer des mesures thermiques à différents endroits, lorsque le bras de sonde (26) est situé dans une position de sondage au-dessus de la surface de chargement;
un système de suspension de l'extrémité arrière du bras de sonde (26), ledit système de suspension étant apte à déplacer le bras entre ladite position de sondage et une position de garage, dans laquelle le bras de sonde (26) est situé à proximité de la paroi (28) du four à l'abris de la trajectoire de chute de la matière de chargement;
**caractérisé**
en ce que ledit bras de sonde (26) est un bras rectiligne dont l'extrémité arrière traverse une ouverture (30) de la paroi (28) du four, ledit système de suspension de l'extrémité arrière du bras de sonde (26) étant situé à l'extérieur du four et étant apte à conférer à cette extrémité arrière un mouvement de révolution autour du centre de cette ouverture (30) de la paroi (28) du four, pour déplacer le bras entre ladite position de sondage et ladite position de garage;
en ce que le bras de sonde (26) est muni d'un segment (50) qui définit une surface de glissement périphérique à symmétrie de révolution évoluant, lors dudit mouvement de l'extrémité arrière du bras de sonde (26), de façon étanche sur la surface intérieure d'un élément annulaire qui est connecté au bord de ladite ouverture (30); et
en ce que ledit système de suspension est apte à conférer au bras de sonde (26) dans ladite position de sondage une inclinaison adaptée au profil de la surface de chargement, la longueur du bras de sonde étant supérieure au rayon du four, de façon qu'il s'étende à travers ladite ouverture (30) de la paroi (28) du four jusque dans la région centrale du four.

2. Sonde selon la revendication 1, caractérisée
en ce que ledit système de suspension du bras de sonde comprend un anneau de support (32), (52) solidaire de la paroi (28) du four et pourvu de deux tourillons extérieurs (38, 40) diamétralement opposés sur lesquels sont articulés deux bras parallèles (42, 44) supportant le bras de sonde (26), ledit bras de sonde (26) étant mobile autour de l'axe défini par les deux tourrillons extérieurs (38, 40) sous l'action d'au moins un vérin (48) monté entre ledit anneau (32), (52) et l'extrémité extérieure du bras de sonde (27), et
en ce que la surface de glissement périphérique du bras de sonde (50) évolue, de façon étanche, sur une surface intérieure dudit anneau (32), (52).

3. Sonde selon la revendication 2, caractérisée en ce que l'axe de pivotement définie par les deux tourillons (38) et (40) est incliné par rapport à un plan horizontal.

4. Sonde selon la revendication 2, caractérisée en ce que l'extrémité extérieure du bras de sonde (26) est porté par une bague de suspension (46) qui est solidaire des deux bras (42), (44) et sur laquelle est articulé ledit vérin (48).

5. Sonde selon la revendication 2, caractérisée en ce que l'anneau de support (32) est un bloc de roulement comprenant une couronne fixe (34) solidaire de la paroi (28) du four et une couronne mobile (36) comprenant lesdits tourillons (38), (40) et pouvant graviter autour de la couronne fixe (34) sous l'action d'un moteur.

6. Sonde selon la revendication 5, caractérisée en ce que ledit bloc de roulement (32) est agencé de façon que son axe de rotation X soit horizontal et diamétral par rapport au four.

7. Sonde selon la revendication 2, caractérisée en ce que ledit anneau de support (52) est un anneau double assurant une suspension du type de cardan pour le bras de lance et comprenant
un anneau intérieur (56) solidaire de la paroi (28) du four, et
un anneau extérieur (54) muni de ladite paire de tourillons extérieurs (38), (40) et d'une paire de tourillons intérieurs (58), (60) disposé en croix avec les tourillons extérieurs, cette paire de tourillons intérieurs (58), (60) connectant ledit anneau extérieur (54) audit anneau intérieur (54).

8. Sonde selon la revendication 1, caractérisée
en ce que ledit système de suspension du bras de sonde (26) comprend
un bloc de roulement (32) avec une couronne fixe (34) solidaire de la paroi (28) du four et une couronne mobile (36) pouvant graviter autour de la couronne fixe (34) sous l'action d'un moteur, et
des moyens de fixation du bras de sonde (26) sur la couronne mobile (36), et
en ce que ladite surface de glissement périphérique du bras de sonde évolue, de façon étanche, sur une surface intérieure, également sphérique de la couronne fixe (34).

9. Sonde selon la revendication 8, caractérisée en ce que ledit bloc de roulement (32) est agencé de façon que son axe de rotation X fasse, dans un plan horizontal, un angle aigu α avec l'axe diamétral du four passant par le centre du bloc de roulement (32).

10. Sonde selon la revendication 9, caractérisée en ce que ledit bloc de roulement (32) est incliné de façon que son axe de rotation X fasse, dans un plan vertical, un angle aigu β avec l'horizontale en s'élevant vers le centre du four.

11. Application d'une sonde selon l'une quelconque des revendications 1 à 8 au sondage de la surface de chargement d'un four à cuve avec un profil de chargement en "V".

12. Application selon la revendication 11 dans laquelle le bras de sonde (26) est incliné parallèlement à la pente du talus de déversement dans la position de sondage, de façon que les orifices pour prendre des échantillons gazeux et effectuer des mesures thermiques soient sensiblement équidistants de la surface de chargement.

## Patentansprüche

1. Sonde für Gasprobeentnahme und thermische Messungen über einer Beschickungsebene eines Schachtofens, bestehend aus:
einem Sondenarm (26) mit einer Reihe von mit Zwischenraum entlang des Sondenarms (26) angeordneten Öffnungen zur gleichzeitigen Entnahme von Gasproben und Durchführung von thermischen Messungen an verschiedenen Stellen, wenn sich der Sondenarm (26) in einer Sondierposition über der Beschickungsebene befindet;
einem Aufhängungssystem für das hintere Ende des Sondenarms (26), wobei dieses Aufhängungssystem geeignet ist, den Arm zwischen der Sondierposition und einer Ruhestellung, in der sich der Sondenarm (26) dicht an der Wand (28) des Ofens abseits des Fallweges des Beschickungsmaterials befindet, zu bewegen;
**dadurch gekennzeichnet,**
daß der Sondenarm (26) ein gerader Arm ist, dessen hinteres Ende durch eine Öffnung (30) in der Wand (28) des Ofens hindurchgeführt ist, wobei das Aufhängungssystem für das hintere Ende des Sondenarms (26) sich außerhalb des Ofens befindet und geeignet ist, diesem hinteren Ende eine ganze Drehbewegung um den Mittelpunkt dieser Öffnung (30) in der Ofenwand (28) zu erteilen, so daß der Arm zwischen der Sondierposition und der Ruhestellung hin- und herbewegt werden kann;
daß der Sondenarm (26) mit einem Segment (50) versehen ist, das eine periphere rotationssymmetrische Gleitfläche beschreibt, die auf der Innenfläche eines mit dem Rand der Öffnung (30) verbundenen ringförmigen Elementes abgedichtet evolviert, während sich das hintere Ende des Sondenarms (26) bewegt;
und daß das Aufhängungssystem geeignet ist, dem Sondenarm (26) in der Sondierposition eine dem Profil der Beschickungsebene angepaßte Schrägstellung zu verleihen, wobei der Sondenarm länger ist als der Radius des Ofens, so daß er durch die Öffnung (30) der Ofenwand (28) bis in den Zentralbereich des Ofens reicht.

2. Sonde gemäß Anspruch 1, dadurch gekennzeichnet,
daß das System zur Aufhängung des Sondenarms einen Haltering (32), (52) umfaßt, der fest mit der Ofenwand (28) verbunden ist und mit zwei sich diametral gegenüberliegenden äußeren Drehzapfen (38,40) versehen ist, auf denen zwei parallele Arme (42, 44) beweglich gelagert sind, die den Sondenarm (26) tragen, wobei der Sondenarm (26) unter Einwirkung eines zwischen dem Ring (32), (52) und dem äußeren Ende des Sondenarms (27) angebrachten Zylinders (48) um die von den beiden äußeren Drehzapfen (38, 40) gebildete Achse bewegt werden kann, und
daß die periphere Gleitfläche des Sondenarms (50) abgedichtet auf einer Innenfläche des Rings (32), (52) evolviert.

3. Sonde gemäß Anspruch 2, dadurch gekennzeichnet, daß die von den beiden Drehzapfen (38) und (40) beschriebene Schwenkachse schräg zur waagerechten Ebene verläuft.

4. Sonde gemäß Anspruch 2, dadurch gekennzeichnet, daß das äußere Ende des Sondenarms (26) von einem Aufhängungsring (46) getragen wird, der mit den beiden Armen (42), (44) fest verbunden ist und an dem der genannte Zylinder (48) gelenkig angebracht ist.

5. Sonde gemäß Anspruch 2, dadurch gekennzeichnet, daß der Haltering (32) ein Lagerblock ist, der einen fest mit der Ofenwand (28) verbundenen, feststehenden Kranz und einen beweglichen Kranz mit den Drehzapfen (38), (40) umfaßt, der sich unter Einwirkung eines Motors um den feststehenden Kranz (34) drehen kann.

6. Sonde gemäß Anspruch 5, dadurch gekennzeichnet, daß der Lagerblock (32) so angeordnet ist, daß seine Rotationsachse X horizontal ist und diametral zum Ofen verläuft.

7. Sonde gemäß Anspruch 2, dadurch gekennzeichnet, daß der Haltering (52) ein Doppelring ist, der dem Sondenarm eine kardanische Aufhängung gewährleistet und aus einem fest mit der Ofenwand (28) verbundenen Innenring (56) und einem Außenring (54) besteht, der mit dem Paar äußeren Drehzapfen (38) (40) und einem Paar zu den äußeren Drehzapfen über Kreuz angeordneten, den Außenring (54) mit dem Innenring (54) verbindenden inneren Drehzapfen (58), (60) versehen ist.

8. Sonde gemäß Anspruch 1, dadurch gekennzeichnet, daß das System zur Aufhängung des Sondenarms (26) aus einem Lagerblock (32) mit einem fest mit der Ofenwand (28) verbundenen feststehenden Kranz (34) und einem beweglichen Kranz (36), der sich unter Einwirkung eines Motors um den feststehenden Kranz drehen kann, und aus Hilfsmitteln zur Befestigung des Sondenarms (26) an dem beweglichen Kranz (36) besteht, und dadurch, daß die periphere Gleitfläche des Sondenarms abgedicht auf einer ebenfalls peripheren Innenfläche des feststehenden Kranzes (34) evolviert.

9. Sonde gemäß Anspruch 8, dadurch gekennzeichnet, daß der Lagerblock (32) so angeordnet ist, daß seine Rotationsachse X in einer waagerechten Ebene einen spitzen Winkel α zur diametralen, durch die Mitte des Lagerblocks (32) gehenden Achse des Ofens bildet.

10. Sonde gemäß Anspruch 9, dadurch gekennzeichnet, daß der Lagerblock (32) so geneigt ist, daß seine Rotationsachse X in einer senkrechten Ebene einen spitzen Winkel β zur Horizontalen bildet, wobei die Rotationsachse X zur Ofenmitte hinansteigt.

11. Anwendung einer Sonde gemäß einem der Ansprüche 1-8 zum Sondieren der Beschickungsebene eines Schachtofens mit V-förmigem Beschickungsprofil.

12. Anwendung gemäß Anspruch 11, bei der der Sondenarm (26) in der Sondierposition parallel zur Schüttböschung geneigt ist, so daß die Öffnungen zur Entnahme von Gasproben und Duchführen von thermischen Messungen im wesentlichen gleich weit von der Beschickungsebene entfernt sind.

## Claims

1. Probe for taking gaseous samples and making thermal measurements above the charging surface of a shaft furnace comprising:
a probe arm (26) provided with a series of orifices spaced along the probe arm (26) for simultaneously taking gaseous samples and making thermal measurements at different places, when the probe arm (26) is located in a sampling position above the charging surface;
a system for suspending the rear end of the probe arm (26), the said suspension system being suitable for moving the arm between the said sampling position and a parked position, in which the probe arm (26) is located near the wall (28) of the furnace sheltered from the falling trajectory of the charging material;
**characterised**
in that the said probe arm (26) is a straight arm whose rear end passes through an opening (30) in the wall (28) of the furnace, the said suspension system for the rear end of the probe arm (26) being located outside the furnace and being suitable for giving this rear end a rotational movement about the centre of this opening (30) in the wall (28) of the furnace, in order to move the arm between the said sampling position and the said parked position;
in that the probe arm (26) is fitted with a segment (50) which defines a peripheral sliding surface with rotational symmetry running, during the said movement of the rear end of the probe arm (26), in an impervious manner over the inner surface of an annular element which is connected to the edge of the said opening (30); and
in that the said suspension system is suitable for giving the probe arm (26) in the said sampling position an inclination adapted to the profile of the charging surface, the length of the probe arm being greater than the radius of the furnace, so that it extends through the said opening (30) in the wall (28) of the furnace as far as the central region of the furnace.

2. Probe according to Claim 1, characterised
in that the said suspension system for the probe arm comprises a supporting ring (32), (52) attached to the wall (28) of the furnace and provided with two diametrically opposed outer journals (38, 40) to which are articulated two parallel arms (42, 44) supporting the probe arm (26), the said probe arm (26) being capable of movement about the axis defined by the two outer journals (38, 40) under the action of at least one actuator (48) mounted between the said ring (32, 52) and the outer end of the probe arm (27), and
in that the peripheral sliding surface of the probe arm (50) runs, in an impervious manner, over an inner surface of the said ring (32), (52).

3. Probe according to Claim 2, characterised in that the pivoting axis defined by the two journals (38) and (40) is inclined with respect to a horizontal plane.

4. Probe according to Claim 2, characterised in that the outer end of the probe arm (26) is carried by a suspension ring (46) which is attached to the two arms (42), (44) and to which the said actuator (48) is articulated.

5. Probe according to Claim 2, characterised in that the supporting ring (32) is a roller assembly comprising a fixed collar (34) attached to the wall (28) of the furnace and a mobile collar (36) comprising the said journals (38), (40) and capable of rotating about the fixed collar (34) under the action of a motor.

6. Probe according to Claim 5, characterised in that the said roller assembly (32) is positioned so that its rotation axis X is horizontal and diametral with respect to the furnace.

7. Probe according to Claim 2, characterised in that the said supporting ring (52) is a double ring providing for a Cardan mount type of suspension for the probe arm and comprising
an inner ring (56) attached to the wall (28) of the furnace, and
an outer ring (54) fitted with the said pair of outer journals (38), (40) and a pair of inner journals (58), (60) arranged crosswise with respect to the outer journals, this pair of inner journals (58), (60) connecting the said outer ring (54) to the said inner ring (54).

8. Probe according to Claim 1, characterised
in that the said suspension system for the probe arm (26) comprises a roller assembly (32) with a fixed collar (34) attached to the wall (28) of the furnace and a mobile collar (36) capable of rotating about the fixed collar (34) under the action of a motor, and
means of fixing the probe arm (26) to the mobile collar (36), and in that the said peripheral sliding surface of the probe arm runs, in an impervious manner, over an inner surface, also spherical, of the fixed collar (34).

9. Probe according to Claim 8, characterised in that the said roller assembly (32) is positioned so that its rotation axis X makes, in a horizontal plane, an acute angle a with the diametral axis of the furnace passing through the centre of the roller assembly (32).

10. Probe according to Claim 9, characterised in that the said roller assembly (32) is inclined so that its rotation axis X makes, in a vertical plane, an acute angle β with the horizontal by being raised towards the centre of the furnace.

11. Application of a probe according to any one of Claims 1 to 8 to the sampling of the charging surface of a shaft furnace with a V-shaped charging profile.

12. Application according to Claim 11, in which the probe arm (26) is inclined parallel to the slope of the charging surface in the sampling position, so that the orifices for taking gaseous samples and making thermal measurements are substantially equidistant from the charging surface.
